# EUROPÄISCHE PATENTSCHRIFT

(11) **EP 0 576 442 B1**
(45) Veröffentlichungstag und Bekanntmachung des Hinweises auf die Patenterteilung: **14.01.1998**
(21) Anmeldenummer: 92905327.0
(22) Anmeldetag: 22.02.1992
(51) Int. Cl.: H04L 25/40, H04L 12/40, H04B 1/40

(54) **EMPFANGSKOMPARATOR**
RECEPTION COMPARATOR
COMPARATEUR DE RECEPTION

(30) Priorität: 16.03.1991 DE 4108709
(43) Veröffentlichungstag der Anmeldung: 05.01.1994
(73) Patentinhaber: ROBERT BOSCH GMBH, 70442 Stuttgart (DE)
(72) Erfinder: KIENZLER, Rainer, D-7410 Reutlingen (DE); FLEISCHER, Ulrich, D-7401 Pliezhausen (DE); ELBRACHT, Berthold, D-7410 Reutlingen (DE)
(86) Internationale Anmeldenummer: DE9200131
(87) Internationale Veröffentlichungsnummer: WO9217016

(56) Entgegenhaltungen:
- DE-A- 3 928 537
- US-A- 4 152 541
- US-A- 4 797 899
- ELECTRONIC COMPONENTS AND APPLICATIONS, Band. 9, Nr. 3, 1990 HORST EY: "CONTROLLER AREA NETWORK (CAN) COMPONENTS PAGE 155-158 ",

## Beschreibung

### Stand der Technik

Die Erfindung betrifft einen Empfangskomparator für ein mindestens eine Steuereinheit und Datenübertragungsleitungen umfassendes Datenübertragungsystem gemäß Oberbegriff des Anspruchs 1.

Empfangskomparatoren für Datenübertragungssysteme, insbesondere für Controller-Area-Network-Bussysteme (CAN-Bussysteme) sind bekannt, siehe z.B. die US-A- 4 152 541. Sie dienen dazu, den Pegel von Signalen, die zwischen CAN-Steuerschaltungen (CAN-Controller) und dem CAN-Bus ausgetauscht werden, anzupassen bzw. umzusetzen, damit eine optimale Signalverarbeitung möglich ist. Nachteil derartiger bekannter Systeme ist, daß sie einen relativ hohen Platzbedarf haben, daß der Fertigungsaufwand hoch ist und daß schließlich eine hohe Ausfallquote gegeben ist.

### Vorteile der Erfindung

Der Empfangskomparator gemäß der vorliegenden Erfindung hat demgegenüber den Vorteil, daß er einen sehr geringen Platzbedarf hat. Er zeichnet sich überdies durch eine hohe Funktionssicherheit aus. Überdies ist ein Kurzschluß der Leitungen des CAN-Busses nach Masse oder zur Spannungsversorgung besonders gut kompensierbar, wobei auch Signale hoher Übertragungsrate übertragen werden können. Dies wird dadurch erreicht, daß die Schaltelemente des Komparators auf einem einzigen Halbleitersubstrat untergebracht werden, daß also die gesamte Schaltung monolithisch integriert wird.

Bevorzugt wird eine Ausführungsform des Empfangskomparators, der eine Signalaufbereitungseinrichtung umfaßt, die einen mit einer Bezugsspannungsquelle versehenen Spannungsteiler aufweist, deren Potential vorzugsweise so ausgewählt ist, daß die Eingangssignale des nachfolgenden Komparators innerhalb des Versorgungsbandes liegen. Mittels dieser Signalaufbereitungseinrichtung ist es möglich, auf dem CAN-Bus eingehende Signale zu verarbeiten, deren Potentiale außerhalb des Versorgungsbandes des Komparators liegen, deren Potentiale also größer als die positive Versorgungsspannung des Komparators und kleiner als dessen negative Versorgungsspannung sind. Ein Kurzschluß zumindest einer der Datenübertragungsleitungen nach Masse einschließlich Masseversatz oder zur Versorgungsspannung kann somit ausgeglichen werden.

Bevorzugt wird weiterhin ein Ausführungsbeispiel des Empfangskomparators, bei dem der Signalaufbereitungseinrichtung eine Komparatorschaltung nachgeordnet ist, die eine Schwellwerterzeugungseinrichtung, vorzugsweise eine Stromquelle, aufweist. Bei einer derartigen Komparatorschaltung ist sichergestellt, daß der CAN-Bus durch den Eingangskomparator nicht unsymmetrisch belastet wird, was insbesondere dann vorteilhaft ist, wenn zahlreiche Eingangskomparatoren an den Datenbus angeschlossen sind.

Weiterhin wird ein Ausführungsbeispiel des Empfangskomparators bevorzugt, bei dem der Komparatorschaltung eine Signalverstärkerstufe nachgeordnet ist, die vorzugsweise in ECL-Technik aufgebaut ist. Mit einer derartigen Verstärkerstufe ist eine sehr geringe Signalverzögerung gewährleistet, so daß auch Digital-Signale mit hoher Übertragungsrate übertragbar sind, wobei der Eingangsgleichtaktbereich bis oberhalb der Versorgungsspannung und bis unterhalb von Masse reicht.

Schließlich wird ein Ausführungsbeispiel des Empfangskomparators bevorzugt, der eine der Signalverstärkerstufe nachgeordnete Ausgangsendstufe aufweist, die vorzugsweise MOS-Transistoren und npn-Transistoren umfaßt. Durch die Wahl derartiger Schaltelemente ist gewährleistet, daß auch dieser Teil des Empfangskomparators eine hohe Schaltgeschwindigkeit erreicht, wobei gleichzeitig ein großer Ausgangsspannungshub sichergestellt ist.

Weitere Ausgestaltungen der Erfindung ergeben sich aus den übrigen Unteransprüchen, wobei es sich als besonders vorteilhaft herausgestellt hat, daß die einzelnen Schaltelemente auf ein und demselben Substrat untergebracht sind, wodurch beispielsweise bei den Widerständen des Spannungsteilers aber auch bei denen des Eingangskomparators gleichlaufende Temperaturgänge gewährleistet sind, so daß eine optimale Temperaturkompensation sichergestellt ist.

### Zeichnung

Die Erfindung wird im folgenden anhand der Zeichnungen näher erläutert. Es zeigen:
- Figur 1: ein Blockschaltbild eines CAN-Treibers mit einem Eingangskomparator und mit einem angedeuteten CAN-Bus und
- Figur 2: eine Prinzipschaltung des in Figur 1 lediglich angedeuteten Empfangskomparators.

### Beschreibung der Ausführungsbeispiele

Der erfindungsgemäße Empfangskomparator ist grundsätzlich für beliebige Datenübertragungseinrichtungen verwendbar. Er soll im folgenden anhand eines CAN-Busses 10 erläutert werden.

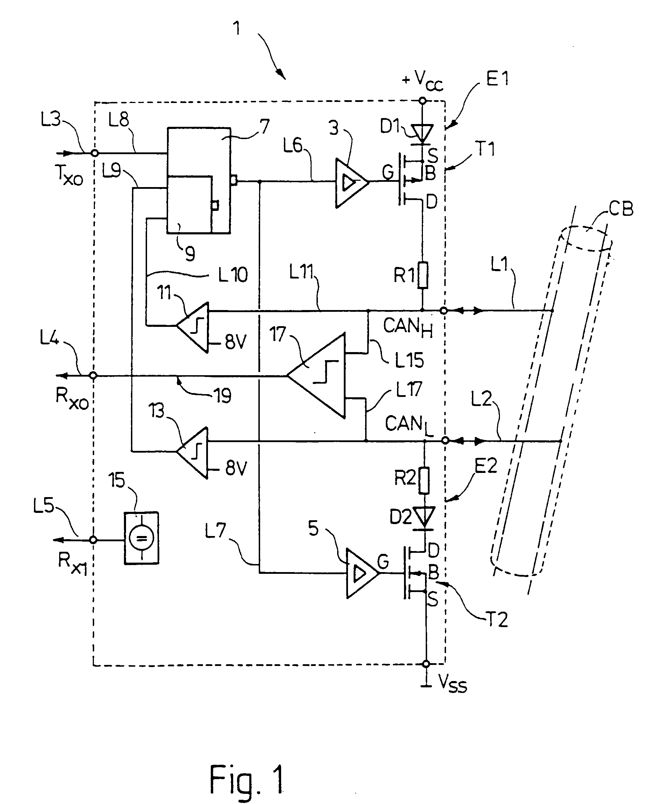

Figur 1 zeigt einen CAN-Treiber 1, dessen Schaltelemente durch eine gestrichelte Linie umfaßt sind. An den CAN-Treiber 1 ist über geeignete Leitungen L1 und L2 ein CAN-Bus CB angeschlossen, der hier als Zwei-Draht-Bus ausgelegt ist. Über die Leitungen L1 und L2 werden Signale einerseits vom Treiber an den Bus und andererseits in umgekehrter Richtung übertragen. Diese Leitungen sind an zwei Anschlußpunkte CAN_{H} und CAN_{L} angeschlossen.

Der CAN-Treiber 1 gemäß Figur 1 weist weitere Anschlüsse auf, nämlich einen Anschluß +V_{cc}, an denen eine positive Versorgungsspannung angeschlossen sein kann, sowie eine Klemme Vₛₛ an die beispielsweise Masse gelegt wird.

Signale einer hier nicht dargestellten Steuerschaltung bzw. eines CAN-Controllers werden über eine Leitung L3 an eine mit Tₓ₀ gekennzeichnete Klemme gelegt.

An einer Klemme Rₓ₀ anliegende Signale werden über eine Leitung L4 und an einer Klemme Rₓ₁ anliegende Signale über eine Leitung L5 an den CAN-Controller weitergeleitet, der hier nicht dargestellt ist.

An der Anschlußklemme +V_{cc} ist eine erste Schaltstufe El angeschlossen, die der Klemme CAN_{H} zugeordnet ist. Die Schaltstufe umfaßt eine erste Diode D₁, deren Anode an der Klemme +V_{cc} anliegt. Sie ist elektrisch leitend mit einem MOS-Transistor T1 verbunden, der hier beispielsweise als Enhancement-Mosfet ausgebildet ist. Die Kathode von D₁ ist mit dem Source-Anschluß S und mit dem Bulk-Anschluß B des Transistors verbunden. Der Drain-Anschluß D des Transistors führt über einen Widerstand R1 an die Klemme CAN_{H}. Der hier dargestellte Transistor T1 ist als p-Kanal-Fet ausgebildet.

Der Gate-Anschluß G des Transistors T1 ist mit dem Ausgang einer hier nur angedeuteten Treiberschaltung 3 verbunden.

Eine zweite Schaltstufe E2 liegt zwischen der Klemme CAN_{L} und der Klemme V_{SS}. Hier ist ein Widerstand R2 unmittelbar an der Klemme CAN_{L} angeschlossen, der andererseits mit der Anode einer Diode D₂ verbunden ist. Deren Kathode liegt am Drain-Anschluß D eines zweiten Transistors T2 der ebenfalls als Enhancement-Mosfet ausgelegt ist. Dieser Transistor ist vorzugsweise als n-Kanal-MOS-Fet ausgebildet. Dessen Bulk-Anschluß B und Source-Anschluß S sind miteinander verbunden und liegen an der Klemme Vₛₛ. Der Gate-Anschluß G des zweiten Transistors T2 ist wiederum mit dem Ausgang einer nur skizziert dargestellten Treiberschaltung 5 verbunden. Die beiden Treiberschaltungen 3 und 5 der Schaltstufen El und E2 werden über Leitungen L6 und L7 von einer Abschaltlogikschaltung 7 angesteuert, die dazu dient, die Schaltstufentransistoren bei Kurzschluß oder bei Verpolung gegen Beschädigung zu schützen. Es handelt sich hier um eine Schaltung bekannter Art, so daß auf deren Beschreibung verzichtet wird.

Die Signale des CAN-Controllers werden über die Leitung L3 und über die Klemme Tₓ₀ an die Eingangsleitung L8 der Abschaltlogikschaltung 7 gelegt. Diese weist außerdem eine Schaltung 9 auf, deren Eingänge L9 und L10 über Komparatorschaltungen 11 und 13 mit den Klemmen CAN_{H} und CAN_{L} verbunden sind.

Die an der Klemme CAN_{H} anliegenden Signale des CAN-Busses CB werden über eine Leitung L11 an einen ersten Eingang des Komparators 11 gelegt, an dessen zweiten Eingang eine feste Bezugsspannung von beispielsweise 8V liegt.

Über eine Leitung L13 werden an der Klemme CAN_{L} anliegende Signale des CAN-Busses CB an einen ersten Eingang des Komparators 13 gelegt, an dessen zweiten Eingang eine Referenzspannung von beispielsweise 8V liegt.

Der CAN-Treiber 1 umfaßt noch einen Spannungsteiler 15, durch den an der Klemme Rₓ₁ eine Referenzspannung für weitere Beschaltungen des Treiberbausteins erzeugt wird.

Der CAN-Treiber 1 weist einen Eingangskomparator 17 auf, an dessen ersten Eingang über eine Leitung L15 Signale der Klemme CAN_{H} und an dessen zweiten Eingang über eine Leitung L17 Signale der Klemme CAN_{L} gelegt werden. Das heißt also, an der Eingangsseite des Empfangskomparators 17 liegen die vom CAN-Bus CB eingehenden Signale.

Der Ausgang des Empfangskomparators 17 ist über eine Leitung L19 mit der Klemme R_{X0} verbunden. Die an dieser Klemme anliegenden Signale werden über die Leitung L4 an den CAN-Controller weitergeleitet.

Figur 1 zeigt damit einen Ausschnitt aus einem CAN-Bussystem, dessen CAN-Bus CB als Zwei-Draht-Bus ausgelegt ist, wie er beispielsweise in Kraftfahrzeugen Verwendung findet. Die auf dem CAN-Bus vorhandenen Signale werden über die Leitungen L1 und L2 an die Klemmen CAN_{H} und CAN_{L} des CAN-Treibers 1 gelegt, von dem Empfangskomparator 17 verarbeitet und über die Klemme Rₓ₀ über die Leitung L4 an den CAN-Controller weitergeleitet. Umgekehrt können Signale des CAN-Controllers über die Klemme Tₓ₀ und über die Abschaltlogik 7 an die Schaltstufen E1 und E2 gelegt werden und damit zu den Klemmen CAN_{H} und CAN_{L} gelangen. Derartige vom CAN-Controller abgegebene Signale können dann über die Leitungen L1 und L2 an den CAN-Bus abgegeben werden.

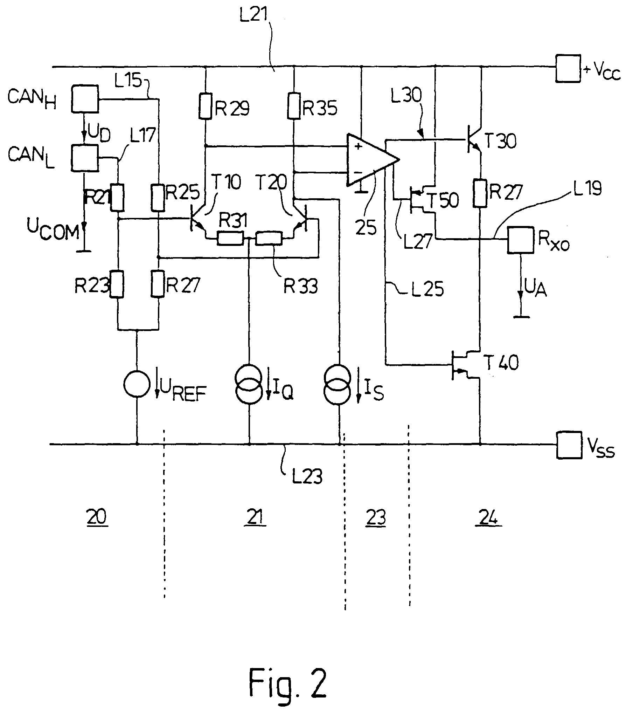

Der Aufbau des in Figur 1 lediglich angedeuteten Empfangskomparators 17 ergibt sich aus dem in Figur 2 gezeigten Schaltbild. In Figur 1 und 2 übereinstimmende Teile sind mit gleichen Bezeichnungen versehen, so daß auf deren ausführliche Beschreibung verzichtet werden kann.

Aus Figur 2 ist ersichtlich, daß der Empfangskomparator 17 über eine Leitung L21 mit der Klemme +V_{cc} des CAN-Treibers 1 verbunden ist und über eine Leitung L23 mit der Klemme Vₛₛ des CAN-Treibers. In Figur 2 sind auch die Klemmen CAN_{H} und CAN_{L} des CAN-Treibers 1 eingezeichnet, auch die beiden Leitungen L15 und L17 über die Signale des CAN-Busses CB dem Empfangskomparator 17 zugeleitet werden. Zwischen den Klemmen CAN_{H} und CAN_{L} liegt die Differenzspannung U_{D}, die von dem Empfangskomparator weiterverarbeitet wird. Zwischen Masse und der Klemme CAN_{L} liegt die Spannung U_{COM}, durch die der Eingangsgleichtaktbereich des Empfangskomparators 17 festgelegt wird. Diese Spannung kann negativ oder größer als die Versorgungsspannung an der Klemme +V_{cc} sein.

Durch gestrichelte Linien ist in Figur 2 angedeutet, daß der Empfangskomparator 17 aus vier kaskadierten Stufen besteht, nämlich aus einer als Eingangsteilerstufe 20 ausgebildeten Signalaufbereitungseinrichtung, einer als Eingangstromschalter ausgebildeten Komparatorschaltung 21, einer Signalverstärkerstufe 23 und schließlich aus einer Ausgangsendstufe 24.

Die Eingangsteilerstufe weist einen Spannungsteiler auf, der mit einer Bezugsspannungsquelle U_{REF} zusammenwirkt. Zwischen der Klemme CAN_{L} und der einen Seite der Bezugsspannungsquelle U_{REF}, die mit Ihrer anderen Seite an der Leitung L23 angeschlossen ist, liegt eine erste Reihenschaltung aus zwei Widerständen R21 und R23. Zwischen der Klemme CAN_{H} und der ersten Seite der Bezugsspannungsquelle U_{REF} liegt eine zweite Reihenschaltung aus Widerständen R25 und R27.

Der Verbindungspunkt zwischen den Widerständen R21 und R23 ist mit der Basis eines Transistors T10 verbunden, die Verbindungsstelle der Widerstände R25 und R23 mit der Basis eines Transistors T20. Zwischen der Leitung L21 und dem Kollektor des Transistors T10 liegt ein Widerstand R29, zwischen dem Emitter und dem ersten Anschluß einer -der Querstromeinstellung des Komperators dienendenStromquelle I_{Q}, deren zweiter Anschluß an der Leitung L23 angeschlossen ist, liegt ein Widerstand R31. Dieser Widerstand ist auch mit einem Widerstand R33 verbunden, der in elektrisch leitender Verbindung mit dem Emitter des Transistors T20 steht. Dessen Kollektor ist mit einem Widerstand R35 verbunden, der andererseits an die Leitung L21 angeschlossen ist. Der Komparator bzw. Eingangsstromschalter 21 weist noch eine Stromquelle I_{S} auf, die einerseits mit der Leitung 23 und andererseits mit dem Kollektor des Transistors T20 verbunden ist.

Die Transistoren T10 und T20 des Eingangsstromschalters 21 sind als npn-Transistoren ausgelegt.

An diese zweite Stufe des Eingangskomparators 17 schließt sich die dritte Stufe, die Signalverstärkerstufe 23 an, die einen vorzugsweise in ECL-Technik realisierten Komparator 25 aufweist. Dessen Spannungsversorgung erfolgt über die Klemme +V_{cc}. An seinem nichtinvertierenden Eingang ist der Kollektor des Transistors T10 und an seinem inventierenden Eingang der Kollektor des Transistors T20 des Eingangstromschalters 21 angeschlossen.

Die vierte Stufe des Empfangskomparators 17, die Ausgangsendstufe 24 weist eine zwischen der Leitung L21 und L23 liegende Reihenschaltung aus einem Transistor T30, einem Widerstand R37 und einem Transistor T40 auf, wobei der Kollektor des npn-Transistors T30 mit der Leitung 21, und dessen Emitter mit dem Widerstand R37 verbunden ist. Der andere Abschluß dieses Widerstands liegt an der Klemme Rₓ₀. Dieser zweite Anschluß des Widerstands R37 ist über Drain und Source des n-Kanal-Fet-Transistors T40 mit der Leitung L23 verbunden.

Zwischen der Leitung L21 und der Klemme Rₓ₀ liegt die Drain-Source-Strecke eines zweiten Fet-Transistors T50, der von der Signalverstärkerstufe 25 über die Leitung L27 -ebenso wie der Transistor T40 über eine Leitung L25- angesteuert wird. Über eine weitere Leitung L30 wird der Transistor T30 ebenfalls von der Signalverstärkerstufe 25 angesteuert.

Die am Ausgang des Empfangskomparator 17, beziehungsweise an der Klemme Rₓ₀ liegende Spannung ist mit U_{A} bezeichnet.

Die einzelnen Schaltelemente des Empfangskomparators 17 sind alle auf einem einzigen Halbleitersubstrat untergebracht. Der Empfangskomparator selbst ist vorzugsweise gemeinsam mit den übrigen Schaltelementen des CAN-Treibers 1 (Figur 1) auf ein und demselben Halbleitersubstrat untergebracht.

Durch die als Eingangsteilerstufe 20 ausgebildete Signalaufbereitungseinrichtung und die Wahl des Potentials U_{REF} können die an den Eingangsklemmen des Empfangskomparators 17 CAN_{H} und CAN_{L} liegenden Signale des CAN-Busses CB für die weitere Verarbeitung eingestellt werden. Dabei paßt die Eingangsteilerstufe den über bzw. unter den Versorgungsspannungen +V_{cc}, Vₛₛ liegenden Gleichtaktspannungsbereich an den Eingangsstromschalter 21 an. Dadurch, daß die Widerstände R21, R23, R25 und R27 in floatenden Wannen ausgeführt sind, kann sichergestellt werden, daß die Eingangssignale der als npn-Transistoren ausgelegten Transistoren T10 und T20 des Eingangskomparators 21 innerhalb des Versorgungsbandes liegen. Um einen großen Eingangsgleichtaktbereich zu erhalten, kann U_{COM} größer als die an der Klemme +V_{cc} liegende Spannung und kleiner als die an das an der Klemme Vₛₛ liegende Potential sein.

Durch die Stromquelle I_{S} am Ausgang der zweiten Stufe wird eine Schaltschwelle erzeugt, die von der Temperatur und der Betriebsspannung an der Klemme +V_{cc} unabhängig ist.

Durch die mit Hilfe der Stromquelle I_{S} eingestellte Schaltschwelle wird erreicht, daß die an den Klemmen CAN_{H} und CAN_{L} liegenden Potentiale, also die Potentiale des CAN-Busses CB, nicht unsymmetrisch beeinflußt werden. Dies ist besonders dann wichtig, wenn zahlreiche CAN-Treiber an ein und demselben CAN-Bus angeschlossen sind.

Durch den emittergekoppelten Komparator 25 der Signalverstärkerstufe 23 wird eine hohe Schaltgeschwindigkeit zur Ansteuerung der Endstufe erreicht, so daß der Empfangskomparator 17 auch Digital-Signale hoher Datenrate verarbeiten kann. Auch in der vorgeschalteten Stufe 21 wird durch die npn-Transistoren T10 und T20 eine hohe Schaltgeschwindigkeit erreicht. Durch die beschriebene Ansteuerung der Ausgangsendstufe 24 und deren Ausführung wird eine kleine Verzögerungszeit in Abhängigkeit der Lastkapazitäten erreicht, so daß insgesant eine hohe Schaltgeschwindigkeit des Empfangskomparators 17 sichergestellt ist. Gleichzeitig ist an der Klemme Rₓ₀, die über die Leitung L19 mit dem Ausgang des Empfangskomparators verbunden ist, ein hoher Ausgangsspannungshub für U_{A} sichergestellt, so daß die weitere Verarbeitung der Signale problemlos möglich ist.

Insgesamt ist festzustellen, daß mit Hilfe des Empfangskomparators 17 einen CAN-Treiber 1 realisiert werden kann, der eine Signalanpassung zwischen dem hier als Zwei-Draht-Leitung ausgelegten CAN-Bus CB und dem CAN-Controller des CAN-Bussystems gewährleistet.

Die geringen Verzögerungszeiten beruhen insbesondere auf der hier dargestellten Stromschaltertechnik. Durch den hier beschriebenen Empfangskomparator ist ein störungsfreier Betrieb auch dann sichergestellt, wenn auf dem CAN-Bus ein Kurzschluß nach Masse selbst bei Vorhandensein eines Masseversatzes oder zur Versorgungsspannung eintritt.

Dadurch, daß der Empfangskomparator 17 monolithisch ausgebildet ist und vorzugsweise gemeinsam mit der gesamten CAN-Treiberschaltung auf einem einzigen Substrat untergebracht ist, ergibt sich eine außerordentlich geringe Signalverzögerung für potentialfreie und potentialgebundene Bussysteme. Dabei wird ein hoher Eingangsspannungs-Gleichtaktbereich auch oberhalb der Versorgungsspannung und unterhalb des Massepotentials gewährleistet. Die Montage des integrierten Bausteins ist sehr einfach und damit kostengünstiger realisierbar. Schließlich ist aufgrund der monolithischen Integration eine hohe Ausfallsicherheit und gute Temperaturkompensation erreicht.

## Patentansprüche

1. Empfangskomparator zur Verwendung in einem mindestens eine Steuereinheit und Datenübertragungsleitungen umfassendes Datenübertragungssystem, insbesondere für ein mindestens einen CAN-Controller und einen CAN-Bus aufweisendes CAN-Bussystem, dadurch gekennzeichnet, daß eine mit den Datenübertragungsleitungen (CB) verbindbare Signalaufbereitungseinrichtung (20) vorgesehen ist, daß der Signalaufbereitungseinrichtung (20) eine Komparatorschaltung (21) nachgeordnet ist, der eine Schwellwerterzeugungseinrichtung (I_{S}) zugeordnet ist, daß der Komparatorschaltung (21) eine Signalverstärkerstufe (23) nachgeordnet ist, die vorzugsweise in ECL-Technik aufgebaut ist, daß der Signalverstärkerstufe (23) eine Endstufe (24) nachgeordnet ist, wobei die einzelnen Schaltelemente monolithisch integriert sind.

2. Empfangskomparator nach Anspruch 1, dadurch gekennzeichnet, daß die Signalaufbereitseinrichtung als Eingangsteiler (20) ausgelegt ist, durch den die Eingangspotentiale für deren Weiterverarbeitung eingestellt werden.

3. Empfangskomparator nach einem der vorhergehenden Ansprüche, dadurch gekennzeichnet, daß der Eingangsteiler (20) eine Bezugsspannungsquelle (U_{REF}) ) aufweist, deren Potential vorzugsweise so ausgewählt ist, daß die Eingangssignale der nachfolgenden Komparatorstufe innerhalb des Versorgungsbandes liegen.

4. Empfangskomparator nach einem der vorhergehenden Ansprüche, dadurch gekennzeichnet, daß zumindest einer der Widerstände (R21, R23, R25, R27) des Eingangsteilers (20), vorzugsweise alle Widerstände, in floatenden Wannen liegend ausgebildet sind.

5. Empfangskomparator nach einem der vorhergehenden Ansprüche, dadurch gekennzeichnet, daß die Schwellwerterzeugungseinrichtung als Stromquelle ausgebildet ist.

6. Empfangskomparator nach einem der vorhergehenden Ansprüche, dadurch gekennzeichnet, daß der Komparatorschaltung (21) gegengekoppelte npn-Transistoren (T10, T20) zugeordnet sind.

7. Empfangskomparator nach einem der vorhergehenden Ansprüche, dadurch gekennzeichnet, daß die Endstufe (24) MOS-Transistoren (T40,T50) und mindestens einen npn-Transistor (T30) umfaßt.

8. Empfangskomparator nach einem der vorhergehenden Ansprüche, dadurch gekennzeichnet, daß der Empfangskomparator (17) Teil einer Treiberschaltung, vorzugsweise eines CAN-Treibers (1), ist, der auch eine Senderendstufe (3, E1; 5, E2) und vorzugsweise eine Abschaltlogikschaltung (7) umfaßt.

## Claims

1. Reception comparator for use in a data transmission system which comprises at least one control unit and data transmission lines, in particular for a CAN bus system which has at least one CAN controller and one CAN bus, characterized in that a signal conditioning device (20) is provided which can be connected to the data transmission lines (CB), in that the signal conditioning device (20) has a comparator circuit (21) connected downstream of it to which a threshold value production device (Iₛ) is assigned, in that the comparator circuit (21) has a signal amplifier stage (23) connected downstream of it, which is preferably constructed using ECL technology, in that the signal amplifier stage (23) has an output stage (24) arranged downstream of it, the individual switching elements being monolithically integrated.

2. Reception comparator according to Claim 1, characterized in that the signal conditioning device is designed as an input splitter (20) by means of which the input potentials are set for their further processing.

3. Reception comparator according to one of the preceding claims, characterized in that the input splitter (20) has a reference voltage source (U_{REF}) whose potential is preferably selected such that the input signals of the downstream comparator stage are within the supply band.

4. Reception comparator according to one of the preceding claims, characterized in that at least one of the resistors (R21, R23, R25, R27) of the input splitter (20), preferably all the resistors, is or are designed in floating wells.

5. Reception comparator according to one of the preceding claims, characterized in that the threshold value production device is designed as a current source.

6. Reception comparator according to one of the preceding claims, characterized in that the comparator circuit (21) is assigned negative feedback npn transistors (T10, T20).

7. Reception comparator according to one of the preceding claims, characterized in that the output stage (24) comprises MOS transistors (T40, T50) and at least one npn transistor (T30).

8. Reception comparator according to one of the preceding claims, characterized in that the reception comparator (17) is part of a driver circuit, preferably a CAN driver (1), which also comprises a transmitter output stage (3, E1; 5, E2) and, preferably, a switch-off logic circuit (7).

## Revendications

1. Comparateur de réception applicable à un système de transmission de données comprenant au moins une unité de commande et des lignes de transmission de données, notamment pour un système de bus CAN comprenant au moins un contrôleur CAN et un bus CAN,
caractérisé en ce qu'
- une installation de traitement de signal (20) est reliée aux lignes de transmission de données (CB), et cette installation de traitement de signal (20) est suivie d'un comparateur (21) auquel est associée une installation générant des valeurs de seuil (I_{S}),
- le comparateur (21) comporte un étage amplificateur de signal qui est de préférence réalisé en technique ECL, et l'étage amplificateur de signal (23) est suivi d'un étage de sortie (24),
- les différents éléments du circuit étant intégrés de manière monolithique.

2. Comparateur de réception selon la revendication 1,
caractérisé en ce que
l'installation de traitement de signal est réalisée comme un diviseur d'entrée (20) qui règle les potentiels d'entrée en vue de la suite de leur traitement.

3. Comparateur de réception selon l'une des revendications précédentes,
caractérisé en ce que
les diviseurs d'entrée (20) comportent une source de tension de référence (U_{REF}) dont le potentiel est choisi de préférence pour que les signaux d'entrée du comparateur suivant se situent dans la bande d'alimentation.

4. Comparateur de réception selon l'une des revendications précédentes,
caractérisé en ce qu'
au moins l'une des résistances (R21, R23, R25, R27) du diviseur d'entrée (20) et de préférence toutes les résistances sont réalisées dans des cuvettes flottantes.

5. Comparateur de réception selon l'une des revendications précédentes,
caractérisé en ce que
l'installation générant la valeur de seuil est une source de courant.

6. Comparateur de réception selon l'une des revendications précédentes,
caractérisé en ce que
le comparateur (21) comporte des transistors de type npn à contre-couplage (T10, T20).

7. Comparateur de réception selon l'une des revendications précédentes,
caractérisé en ce que
l'étage de sortie (24) comprend des transistors MOS (T40, T50) et au moins un transistor npn (T30).

8. Comparateur de réception selon l'une des revendications précédentes,
caractérisé en ce que
le comparateur de réception (17) fait partie d'un circuit pilote de préférence d'un pilote CAN, 1 comprenant également un étage de sortie d'émission (3, E1 ; 5, E2) et de préférence une logique de coupure (7).
